Europäisches Patentamt

European Patent Office

Office européen des brevets

(11) Publication number: **0 481 540 A1**

# EUROPEAN PATENT APPLICATION

(21) Application number: **91202028.6**

(22) Date of filing: **07.08.91**

(51) Int. Cl.⁵: **F16M 11/14**, F21V 21/28, F16C 11/10

(30) Priority: **08.10.90 NL 9002173**

(43) Date of publication of application:
**22.04.92 Bulletin 92/17**

(84) Designated Contracting States:
**AT BE CH DE DK ES FR GB GR IT LI LU NL SE**

(71) Applicant: **LUMIANCE B.V.**
**Oudeweg 155**
**NL-2031 CC Haarlem(NL)**

(72) Inventor: **Hendriks, Hendrikus Jacobus**
**Kennemerlaan 112**
**NL-1972 ER IJmuiden(NL)**

(74) Representative: **Van kan, Johan Joseph**
**Hubert, Ir.**
**Algemeen Octrooibureau P.O. Box 645**
**Boschdijk 155**
**NL-5600 AP Eindhoven(NL)**

(54) **A combination of a support means and an object supported by said support means.**

(57) The invention relates to a combination of a support means (1) and an object (13) supported by said support means, whereby said support means and said object are interconnected by means of a spherical body (12). The spherical body is surrounded by a band-shaped means (5), which is arranged near a plane extending through the centre of the spherical body. The construction is thereby such that the support means and the object do not move from a set position, under the influence of the frictional force between the spherical body and the band-shaped means.

Fig 2

The invention relates to a combination of a support means and an object supported by said support means, whereby said support means and said object are interconnected by means of a spherical body.

Such constructions are often used, in particular for adjustably mounting an object in the shape of a light source or a so-called spotlight on a wall, ceiling or the like, thus making it possible to optimally arrange the light source with respect to the project to be illuminated.

With the known structures for blocking the support means and the object supported by said support means with respect to each other use is frequently made of clamping shells or the like to be clamped on the spherical body, usually by means of a bolt passed through said spherical body. The construction of these known structures is complicated, therefore, and difficult to adjust and block in the set position.

According to the invention the spherical body is surrounded by a band-shaped means, which is arranged near a plane extending through the centre of the spherical body, whereby the construction is such that the support means and the object do not move from a set position, under the influence of the frictional force between the spherical body and the band-shaped means.

By using the structure according to the invention a particularly simple construction of the combination of a support means and an object supported by said support means with regard to their mutually adjustable connection can be obtained, whereby the support means and the object supported by said support means can be moved with respect to each other without releasing clamping bolts or the like and remain in the set position thereby without tightening clamping bolts or the like.

The invention will be explained in more detail hereafter with reference to a possible embodiment of the construction according to the invention diagrammatically illustrated in the accompanying Figures.

Figure 1 is a diagrammatic view, partly in elevation and partly in section, of the connection between a support means and an object supported by said support means.

Figure 2 is a sectional view of Figure 1, along the line II - II in Figure 1.

Figure 3 is a larger-scale view of the encircled part III in Figure 1.

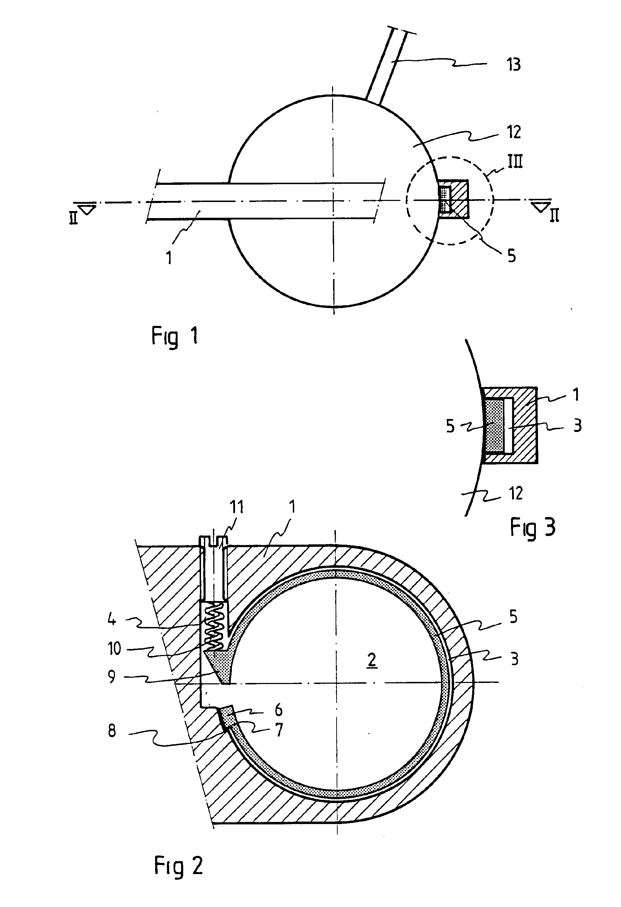

The Figures show a plate-shaped support means 1, in which a circular opening 2 is provided. In the boundary wall of said opening a circular groove 3 is provided in the support means 1, said groove having a substantially rectangular section. When seen in Figure 2 said groove 3, near the lefthand side of the opening 2, connects with a bore 4 in the support means 1, said bore 4 extending more or less in abutment with the groove 3 and being internally threaded along at least part of its length.

The groove 3 accommodates a band-shaped means 5, e.g. made of rubber or a plastic material. Said band-shaped means, which is split in the illustrated embodiment, is thereby arranged in such a manner that the ends of said band-shaped means, which are spaced from each other by some distance, are located near the connection of the bore 4 to the groove 3.

The one end 6 of the band-shaped means is thicker than the abutting part of the band-shaped means, so that a shoulder 7 is formed at the transition between the thinner part and the thicker part 6 of the band-shaped means, said shoulder abutting against a projection 8 formed in the support means.

The other end of the band-shaped means is provided with a nose 9 projecting into the bore 4. Said nose 9 supports the end of a compression spring 10 placed in the bore 4, said spring 10 being confined between the nose 9 and an adjusting screw 11 screwed into the bore 4.

As is illustrated in Figures 1 and 3 a spherical body 12 may be provided in the recess 2 in the support means 1, whereby the construction is such that at the level of a plane extending through its centre said spherical body is surrounded by the band-shaped means 5, in such a manner that the inner circumference of said band-shaped means abuts against the outer circumference of the spherical body. An object (not shown), such as a light source in the shape of a so-called spotlight, may e.g. be secured to the spherical body 12 by means of a connecting rod 13.

The construction is such that under the influence of the frictional force, which is present between the inner circumference of the band-shaped means 5 and the outer circumference of the spherical body, said spherical body does not move from a set position, so that the support means 1 and the object 13, which are interconnected by means of the spherical body 12, do not move from a set position. The support means and the object may be moved with respect to each other by turning the spherical body 12 while overcoming the above frictional force, which has been generated by providing the band-shaped means 5 with sufficient clamping force on the outer circumference of the spherical body, which may be effected in a simple manner by means of the adjusting screw 11. If after some time the material of the band-shaped means will extend a little, this will be compensated by the pressure of the spring 10. In practice it has become apparent that it will rarely be necessary to readjust the adjusting screw 11 after the initial mounting.

For an easy fitting of the combination the support means may be split along the plane indicated by the line II - II in Figure 1, whereby the parts of said support means may be clamped together in the position illustrated in the Figures by means not shown, e.g. by means of bolts.

When using the construction according to the invention for supporting a light source as indicated above the support means 1 will generally be fixed to a wall, ceiling or the like and the light source will be secured to the spherical body, e.g. by means of an arm 13. It will be apparent, however, that it is also conceivable for the spherical body 12 to be secured to a part which is fixed to a wall, ceiling or the like and that a further part is adjustably supported by the spherical body.

When the construction according to the invention is used it is not necessary to release and fix clamping means in order to carry out adjustments, but it is only necessary to turn the parts with respect to each other while overcoming the frictional force, whereby said parts will not move at all from the set position.

Although hereinbefore mention has been made of a substantially rectangular section of the groove 3, it will be apparent that said groove 3 may also have a different section, e.g. semi-circular or V-shaped, whereby said band-shaped means will have a corresponding section.

**Claims**

1.  A combination of a support means and an object supported by said support means, whereby said support means and said object are interconnected by means of a spherical body, characterized in that the spherical body is surrounded by a band-shaped means, which is arranged near a plane extending through the centre of the spherical body, whereby the construction is such that the support means and the object do not move from a set position, under the influence of the frictional force between the spherical body and the band-shaped means.

2.  A combination according to claim 1, characterized in that said spherical body is located in an opening provided in the object casu quo the support means, whilst a groove for accommodating the band-shaped means is formed in the edge of said opening.

3.  A combination according to claim 1 or 2, characterized in that said band-shaped means is split and that means are provided by which the spaced apart ends of the band-shaped means can be moved in a direction towards each other.

4.  A combination according to claim 3, characterized in that spring means are provided, which attempt to move the two ends of the band-shaped means towards each other.

5.  A support means according to claim 3 or 4, characterized in that one end of the band-shaped means is blocked against movement in a direction remote from the other end of the band-shaped means, whilst means are provided by which said other end can be moved towards said blocked end.

6.  A support means according to any one of the claims 3 - 5, characterized in that one end of the band-shaped means is thickened, whereby a shoulder is formed at the transition between the thickening and the other part of the band-shaped means, said shoulder being supported by a projection, whilst the other end of the band-shaped means has a projecting nose, whereby a set bolt acts on said nose.

Fig 1

Fig 3

Fig 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-4 898 490 (HERBERMANN)<br>* column 2, line 55 - column 3, line 26; figures * | 1,3 | F16M11/14<br>F21V21/28<br>F16C11/10 |
| A | DE-C-347 651 (JAENISCH)<br>* claim 1; figures 1,2 * | 1 | |
| A | NL-A-6 506 011 (SCHIFFMANN)<br>* the whole document * | 1 | |
| A | FR-A-881 607 (HÖRAUF) | - | |
| A | US-A-1 369 707 (REILLY) | - | |

**TECHNICAL FIELDS SEARCHED (Int. Cl.5 )**

F16C
F16M
F21V

The present search report has been drawn up for all claims

| Place of search | Date of completion of the search | Examiner |
|---|---|---|
| THE HAGUE | 07 FEBRUARY 1992 | VAN DER WAL W. |